(19) Europäisches Patentamt / European Patent Office / Office européen des brevets

(11) **EP 4 759 555 A1**

(12) # DEMANDE DE BREVET EUROPEEN

(43) Date de publication:
**17.06.2026 Bulletin 2026/25**

(21) Numéro de dépôt: **24218880.3**

(22) Date de dépôt: **10.12.2024**

(51) Classification Internationale des Brevets (IPC):
**B42D 25/369** (2014.01)     **G08B 13/24** (2006.01)
**G01N 27/72** (2006.01)

(52) Classification Coopérative des Brevets (CPC):
**G08B 13/2442; G01N 27/72**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Haute Ecole d'Ingénierie et de Gestion du Canton de Vaud (HEIG-VD)**
**1400 Yverdon-Les-Bains (CH)**

(72) Inventeurs:
• **Besson, Christophe**
  **1427 Bonvillars (CH)**
• **Bouchet, Jérôme**
  **1223 Cologny (CH)**
• **Gritti, Dominique**
  **2016 Cortaillod (CH)**
• **Kissling, Simon**
  **1400 Yverdon-les-Bains (CH)**
• **Savary, Alain**
  **2019 Rochefort (CH)**
• **Serrano-Desbiolles, Eric**
  **74930 Reignier-Esery (CH)**

(74) Mandataire: **Novagraaf International SA**
**Chemin de l'Echo 3**
**1213 Onex, Geneva (CH)**

(54) ## PIECE MANUFACTUREE AVEC MARQUEUR

(57) Pièce manufacturée (100), comprenant au moins un composant conducteur de l'électricité procurant à la pièce manufacturée (100) une réponse magnétique donnée à une exposition à un champ magnétique prédéterminé et variable dans le temps, caractérisée en ce que la pièce manufacturée (100) comprend au moins un marqueur (110) agencé pour modifier la réponse magnétique donnée de la pièce manufacturée (100), afin de procurer à la pièce manufacturée (100) marquée une réponse magnétique spécifique et prédéterminée.

[Fig. 7]

**Description**

Domaine technique de l'invention

La présente invention concerne de manière générale les pièces manufacturées, et en particulier, la présente invention concerne des pièces manufacturées comprenant un marqueur à des fins de contrôle de production, de maintenance, de traçabilité, d'authentification.

État de la technique

Il est connu dans l'art antérieur de prévoir des marqueurs sur les pièces manufacturées à des fins de contrôle de production, de maintenance, de traçabilité, d'authentification. En contrepartie, ces marqueurs peuvent affecter l'aspect esthétique s'ils sont visibles, requérir un démontage s'ils sont enfermés dans la pièce manufacturée, requérir un appareillage spécifique et complexe à mettre en oeuvre si ces marqueurs sont par exemple des gravures ne pouvant être lues qu'avec un appareillage optique particulier.

Exposé de l'invention

Un but de la présente invention est de répondre aux inconvénients de l'art antérieur mentionnés ci-dessus et en particulier, tout d'abord, de proposer une pièce manufacturée comprenant un marqueur à des fins de contrôle de production, de maintenance, de traçabilité, d'authentification, et qui soit simple et/ou fiable à fabriquer et/ou à contrôler, et/ou à tracer, et/ou à authentifier.

Pour cela un premier aspect de l'invention concerne une pièce manufacturée, comprenant au moins un composant conducteur de l'électricité procurant à la pièce manufacturée une réponse magnétique donnée à une exposition à un champ magnétique prédéterminé et variable dans le temps, caractérisée en ce que la pièce manufacturée comprend au moins un marqueur agencé pour modifier la réponse magnétique donnée de la pièce manufacturée, afin de procurer à la pièce manufacturée marquée une réponse magnétique spécifique et prédéterminée.

Selon la mise en oeuvre ci-dessus, le marqueur procure une réponse magnétique spécifique et prédéterminée en réponse à une exposition à un champ magnétique variable dans le temps. En conséquence, il est possible de distinguer une pièce manufacturée pourvue d'un tel marqueur d'une pièce manufacturée qui en est dépourvue. En d'autres termes, la présence du marqueur dans la pièce manufacturée permet de garantir une différence (avec typiquement la même pièce manufacturée mais sans le marqueur) de la réponse magnétique, lors de, ou suite à une exposition à un champ magnétique variable dans le temps.

On peut noter que la réponse magnétique spécifique et prédéterminée peut être une absence de signal en réponse à l'exposition au champ magnétique prédéterminé et variable dans le temps. En effet, on peut choisir à dessein des matériaux qui ne réagissent pas à l'exposition au champ magnétique prédéterminé et variable dans le temps. Selon cette mise en oeuvre, le marqueur peut être choisi pour ne pas perturber le champ magnétique prédéterminé et variable dans le temps et cette absence de perturbation forme la réponse magnétique spécifique et prédéterminée, c'est-à-dire une signature particulière.

On peut prévoir d'intégrer le marqueur à une étape particulière de la fabrication, pour vérifier ensuite que la pièce manufacturée a bien subi cette étape particulière de fabrication. On peut prévoir de vérifier la présence du marqueur lors d'une opération finale de fabrication, ou lors d'une opération de maintenance ou de révision, pour s'assurer de la conformité de la pièce manufacturée. On peut aussi prévoir un codage avec un ou plusieurs marqueurs, par exemple pour indiquer la provenance de la pièce manufacturée (fournisseur, ligne de manufacture ou de fabrication...).

Autrement dit, le marqueur est un marqueur qui modifie la réponse magnétique de la pièce manufacturée, c'est-à-dire qui procure une signature magnétique particulière, et,

- qui peut être choisi ou localisé pour ne pas affecter l'aspect visuel de la pièce manufacturée, si bien que la qualité perçue est améliorée,
- dont la détection peut être effectuée simplement avec l'exposition à un champ magnétique variable dans le temps.

Les possibilités de placer le marqueur dans la pièce manufacturée sont nombreuses, si bien que la conception est plus aisée, car comme dit ci-dessus, il n'y a pas obligatoirement besoin de prévoir d'accès direct pour une lecture optique, ni de prévoir obligatoirement un accès ou un démontage pour accéder au marqueur.

D'une manière générale, la pièce manufacturée comprend au moins un composant conducteur de l'électricité (ce composant pouvant aussi être le marqueur), et l'exposition à un champ magnétique variable dans le temps de ce composant conducteur de l'électricité provoque la circulation de courants électriques dans ce composant qui génèrent un champ magnétique opposé au champ magnétique imposé. Le composant conducteur de l'électricité, en modifiant le champ magnétique imposé, détermine donc une réponse magnétique pouvant être mesurée. La présence du marqueur (un élément séparé ou une modification locale d'un composant) dans la pièce manufacturée est prévue pour modifier la réponse magnétique de sorte à créer une réponse magnétique spécifique et prédéterminée ou attendue. La présence du marqueur permet alors une détection extrêmement fiable dans le temps, la présence du marqueur est résistante à des opérations de maintenance typiquement effectuées lors d'un service après vente, le marqueur peut être invisible, et/ou impossible à répliquer.

La pièce manufacturée peut comprendre les caractéristiques suivantes, prises individuellement ou en combinaison.

Selon un mode de réalisation, le marqueur procure la possibilité de distinguer la réponse magnétique, lors de, ou suite à une exposition à un champ magnétique variable dans le temps, d'une pièce manufacturée équipée du marqueur de la réponse magnétique d'une pièce manufacturée non-équipée du marqueur mais présentant par exemple le même aspect visuel et/ou les mêmes dimensions extérieures, et/ou la même masse, et/ou les mêmes caractéristiques techniques que la pièce manufacturée équipée du marqueur.

Selon un mode de réalisation, le marqueur est formé par un seul composant ou une seule pièce particulière de la pièce manufacturée. Selon un mode de réalisation, le marqueur présente une masse inférieure à 5%, de préférence inférieure à 2%, de préférence inférieure à 1% de la masse de la pièce manufacturée. Selon un mode de réalisation, le marqueur présente un volume inférieur à 5%, de préférence inférieur à 2%, de préférence inférieur à 1 % du volume de la pièce manufacturée.

Selon un mode de réalisation, le marqueur forme au moins en partie le composant conducteur de l'électricité.

Selon un mode de réalisation, le marqueur est un composant isolant de l'électricité agencé entre deux composants conducteurs de l'électricité. Selon un mode de réalisation, le marqueur est un composant isolant ou formant une isolation dans la pièce manufacturée. Selon un mode de réalisation, le marqueur est un composant isolant ou formant une isolation et agencé entre deux pièces conductrices de l'électricité de la pièce manufacturée. Selon un mode de réalisation, le marqueur présente une conductivité $\sigma$ (S/m) très faible (quasiment nulle, inférieure à $10^{-3}$ S/m, de préférence inférieure à $10^{-6}$ S/m, de préférence inférieure $10^{-10}$ S/m) et/ou une résistivité $\rho$ ($\Omega$.m) très grande (supérieure à $10^{6}$ $\Omega$.m, de préférence supérieure à $10^{9}$ $\Omega$.m, de préférence supérieure à $10^{12}$ $\Omega$.m). Selon un mode de réalisation, le marqueur est un composant isolant ou formant une isolation et formé par un film ou par un traitement de surface. Selon un mode de réalisation, le marqueur est un composant isolant ou formant une isolation et pris en sandwich entre deux pièces de la pièce manufacturée, par exemple conductrices de l'électricité. Autrement dit, le marqueur est un composant isolant ou formant une isolation et agencé dans la pièce manufacturée pour compartimenter ou modifier une pièce ou un ensemble de pièces conductrice(s) de l'électricité. Selon un mode de réalisation, le marquage consiste à ajouter une pièce isolante (isolant électrique) entre deux pièces conductrices ou d'ajouter un traitement de surface isolant entre des pièces en contact. Cela permet de modifier la circulation des courants et donc la signature lors de, ou en réponse à, l'exposition au champ magnétique variable.

Selon un mode de réalisation, le marqueur est un aimant et/ou un composant qui présente une aimantation rémanente. Cela permet de modifier la signature lors de, ou en réponse, à l'exposition au champ magnétique variable.

Selon un mode de réalisation, le marqueur est inclus dans un composant fonctionnel de la pièce manufacturée, comme un boîtier, un châssis, un composant d'un mécanisme interne, un couvercle externe, un accessoire de la pièce manufacturée. Ainsi, il n'y a pas besoin d'ajouter un composant spécifique : le marqueur est directement intégré dans un composant existant de la pièce manufacturée et procurant une fonction particulière.

D'une manière générale, le composant fonctionnel procure dans la pièce manufacturée au moins une fonction première, par exemple une fonction d'assemblage, d'étanchéité, d'affichage, de transmission de mouvement, de stockage d'énergie, de décoration...

Selon un mode de réalisation, le marqueur forme également un marquage visuel. On peut envisager une gravure qui retire une masse particulière de matière pour procurer une réponse magnétique spécifique. On peut envisager un marquage avec une encre comprenant un composé réagissant à l'exposition au champ magnétique variable dans le temps. Par exemple, on peut choisir une encre avec un composé procurant une réponse magnétique spécifique, on peut prévoir d'écrire certains caractères d'un mot avec cette encre et d'autres caractères du mot avec une encre ne réagissant pas, ou différemment.

Selon un mode de réalisation, le marqueur est un évidement ménagé dans le composant fonctionnel. On peut prévoir une cavité (ouverte ou fermée), un trou (débouchant, fermé...), une ou plusieurs porosité(s). Selon un mode de réalisation, l'évidement présente une dimension caractéristique (un diamètre, une profondeur, une longueur, une largeur) supérieure à 0.05 mm, de préférence supérieure à 0.1 mm, de préférence supérieure à 0.25 mm, de préférence supérieure à 0.5 mm, de préférence supérieure à 0.75 mm, de préférence supérieure à 1 mm, et/ou inférieure à 2 mm, de préférence inférieure à 1.75 mm, de préférence inférieure à 1.5 mm, de préférence inférieure à 1.25 mm, de préférence inférieure à 1 mm, de préférence inférieure à 0.75 mm.

Selon un mode de réalisation, le marqueur est un insert ménagé dans le composant fonctionnel. Selon ce mode de réalisation, le marqueur est un insert, c'est à dire un composant ajouté et différent/distinct du composant sur ou dans lequel il est embarqué, notamment au niveau de la matière. Selon un mode de réalisation, l'insert présente une dimension caractéristique (un diamètre, une profondeur, une longueur, une largeur, une dimension hors tout) supérieure à 0.05 mm, de préférence supérieure à 0.1 mm, de préférence supérieure à 0.25 mm, de préférence supérieure à 0.5 mm, de préférence supérieure à 0.75 mm, de préférence supérieure à 1 mm, et/ou inférieure à 2 mm, de préférence inférieure à 1.75 mm, de préférence inférieure à 1.5 mm, de préférence inférieure à 1.25 mm, de préférence inférieure à 1 mm, de préférence inférieure à 0.75 mm.

Selon un mode de réalisation, le marqueur forme un composant spécifique et/ou non-fonctionnel de la pièce manufacturée. Selon ce mode de réalisation, le marqueur est un composant ajouté et différent/distinct des composants de la pièce manufacturée. Selon ce mode de réalisation, le marqueur forme un composant spécifique et/ou non-fonctionnel de la pièce manufacturée qui n'a qu'une fonction de rendre la réponse magnétique spécifique et prédéterminée.

Selon un mode de réalisation, le marqueur est un composant spécifique et/ou non-fonctionnel attaché à un composant fonctionnel de la pièce manufacturée, comme un boîtier, un châssis, un composant d'un mécanisme interne, un couvercle externe, un accessoire de la pièce manufacturée, un élément décoratif à l'intérieur ou à l'extérieur de la pièce manufacturée. On peut prévoir un revêtement de surface, un traitement de surface, un film apposé à un composant fonctionnel de la pièce manufacturée. On peut aussi prévoir un pion, une vis n'ayant aucune fonction d'assemblage. On peut aussi prévoir un marqueur formant un composant en relief ou en continuité d'un composant fonctionnel de la pièce manufacturée. Selon un mode de réalisation, le marqueur peut être un élément physique différent du reste de la pièce considérée, un marquage, une modification locale de la matière, un dopage, une couche additionnelle (déposée par PVD par exemple), une modification géométrique de la pièce pour obtenir une réponse particulière. Selon un mode de réalisation, il est possible de substituer un élément d'un groupe, par un autre élément avec d'autres propriétés pour procurer une réponse magnétique spécifique, mais d'aspect identique aux autres éléments du groupe. Par exemple, on peut prévoir de choisir une des vis de la pièce manufacturée.

Sous la dénomination « pièce manufacturée », on comprend tout type d'article pouvant être fabriqué à la main ou par des machines. On peut envisager des produits de la vie courante, comme des appareils électroniques (les téléphones, les appareils de suivi d'activité), des emballages, des appareils domestiques ou ménagers, des composants industriels, des composants des industries de grande série (l'automobile, l'électronique, l'éclairage, l'alimentation et ses emballages), des composants de sécurité (des équipements de protection individuels, des médicaments et leurs emballages, les équipements de santé).

Selon un mode de réalisation, le marqueur est formé par une modification, par exemple locale, de la matière d'un composant de la pièce manufacturée, la modification, par exemple locale, étant formée par exemple par un traitement laser par exemple localisé, et/ou une implantation ionique par exemple localisée et/ou un dépôt par exemple localisé d'une couche suivi d'un traitement thermique de diffusion et/ou un traitement par exemple local de carburation/nitruration/oxydation et/ou leur combinaisons.

Selon le mode de réalisation ci-dessus, la modification locale de la matière est effectuée en vue de modifier les propriétés électriques et/ou magnétiques d'un composant de la pièce manufacturée, par exemple en induisant un changement de phase, une modification de la structure cristalline, une modification de la composition chimique. Ainsi, la réponse magnétique de la pièce manufacturée équipée du marqueur sera différente d'une même pièce manufacturée exempte de marqueur, en raison du changement imposé sur les propriétés électriques et/ou magnétiques d'un composant de la pièce manufacturée.

Selon un mode de réalisation :

- le composant fonctionnel est formé avec une première matière présentant au moins une première caractéristique magnétique prédéterminée ou une première caractéristique électrique prédéterminée,
- le marqueur est formé avec une deuxième matière présentant au moins une deuxième caractéristique magnétique prédéterminée ou une deuxième caractéristique électrique prédéterminée, différente respectivement de la première caractéristique magnétique prédéterminée ou de la première caractéristique électrique prédéterminée. Ainsi, la différence de propriété magnétique ou de propriété électrique est prévue pour permettre de générer une réponse magnétique spécifique et prédéterminée mesurable, permettant de déterminer la présence du marqueur.

Selon un mode de réalisation :

- le composant fonctionnel est formé avec une première matière présentant au moins une première perméabilité magnétique prédéterminée ou une première conductivité électrique prédéterminée,
- le marqueur est formé avec une deuxième matière présentant au moins une deuxième perméabilité magnétique prédéterminée ou une deuxième conductivité électrique prédéterminée, différente d'au moins 50% respectivement de la première perméabilité magnétique prédéterminée ou de la première conductivité électrique prédéterminée.

Selon un mode de réalisation, le marqueur :

- est métallique, et/ou
- est une portion métallique d'un composant de la pièce manufacturée ayant subi un traitement de surface ou un traitement thermique prédéterminé, ou une modification locale de la matière, et/ou
- comprend une bobine électrique, et/ou
- présente une température de Curie comprise entre 250 K et 400 K.

On peut prévoir par exemple d'effectuer un traitement thermique particulier sur tout un composant de la pièce manufacturée. Par exemple, on peut prévoir un recuit effectué entre 500°C et 1200°C sur un composant comprenant un matériau tel que du FeCo, FeNi ou FeSi, ce qui modifiera notablement et définitivement les propriétés magnétiques de ce composant à température ambiante. Le composant en question devient un marqueur une fois qu'il a subit ce traitement thermique, et reste géométriquement en tout point identique au même composant qui n'a pas subi de traitement thermique.

On peut prévoir par exemple une bobine électrique spécifique pour le marquage, en plus d'une bobine électrique d'un moteur électrique par exemple.

On peut prévoir par exemple de réaliser le marqueur avec un matériau magnétocalorique, comme le Gadolinium, qui a un comportement magnétique qui change très fortement selon la température. Au dessous d'un point de température défini par les propriétés physiques du matériau (point de Curie), celui-ci se comporte comme une matière ferromagnétique, c'est-à-dire qu'il conduit et canalise avec facilité les lignes de champ. Pour une température supérieure à la température de Curie, le matériau se comporte de manière paramagnétique, il laisse passer les lignes de champ sans les influencer, comme de l'air. Le point de Curie du Gadolinium est proche d'environ 20°C. Avec un marqueur réalisé avec ce matériau, la réponse magnétique n'est pas la même si on fait la mesure à 10°C ou à 30°C.

On peut prévoir une association « métallique / non-métallique » ou « conducteur de l'électricité / non-conducteur de l'électricité » entre le marqueur et un composant particulier de la pièce manufacturée porteur du marqueur. On peut par exemple prévoir l'un du composant porteur et du marqueur en matériau conducteur de l'électricité et l'autre du composant porteur et du marqueur en matériau non- conducteur de l'électricité (une céramique par exemple). On peut par exemple prévoir l'un du composant porteur et du marqueur en matériau métallique et l'autre du composant porteur et du marqueur en matériau non-métallique (une céramique par exemple). A titre d'exemple, on peut prévoir une pièce en céramique, logeant un marqueur métallique, ou le contraire.

Selon un mode de réalisation, la pièce manufacturée comprend une pluralité de marqueurs chacun agencé pour modifier la réponse magnétique donnée de la pièce manufacturée, afin de procurer à la pièce manufacturée marquée une réponse magnétique spécifique et prédéterminée. Autrement dit, on peut procurer un codage de la pièce manufacturée ou un marquage local.

Selon un mode de réalisation, au moins deux marqueurs sont formés dans des matières différentes, de sorte à chacun modifier de manière spécifique la réponse magnétique donnée de la pièce manufacturée, afin de procurer à la pièce manufacturée marquée une réponse magnétique spécifique et prédéterminée.

Selon un mode de réalisation, au moins deux marqueurs sont agencés à des positions spécifiques et différentes de la pièce manufacturée, de sorte à chacun modifier de manière spécifique et locale la réponse magnétique donnée de la pièce manufacturée, afin de procurer à la pièce manufacturée marquée au moins deux réponses magnétiques spécifiques, prédéterminées et locales.

Selon un mode de réalisation, la pluralité de marqueurs est agencée dans la pièce manufacturée de sorte à procurer un codage d'authentification avec la réponse magnétique spécifique et prédéterminée.

Selon un mode de réalisation, on peut prévoir une méthode de contrôle d'une pièce manufacturée comprenant au moins un marqueur agencé pour modifier la réponse magnétique donnée de la pièce manufacturée, la méthode de contrôle comprenant une phase de contrôle avec les étapes consistant à :

- placer la pièce manufacturée, ou au moins une partie de la pièce manufacturée, à une position relative prédéterminée par rapport à au moins une source de champ magnétique et/ou par rapport à au moins un dispositif de mesure de champ magnétique,
- exposer la pièce manufacturée, ou au moins une partie de la pièce manufacturée, à au moins un champ magnétique prédéterminé et variable au cours du temps généré par la source de champ magnétique,
- mesurer, au moyen d'au moins un dispositif de mesure de champ magnétique, au moins une caractéristique du champ magnétique au voisinage de la pièce manufacturée exposée au champ magnétique prédéterminé et variable au cours du temps,
- déduire une réponse magnétique de la pièce manufacturée à partir de la caractéristique mesurée du champ magnétique au voisinage de la pièce manufacturée,
- comparer la réponse magnétique de la pièce manufacturée à une réponse magnétique de référence.

Selon la mise en oeuvre ci-dessus, la méthode de contrôle comprend une étape consistant à exposer la pièce manufacturée à au moins un champ magnétique prédéterminé et variable au cours du temps. La demanderesse s'est aperçue avec surprise qu'une telle exposition à des champs magnétiques variables, en particulier à des champs magnétiques variables de faible amplitude, ne perturbait pas le fonctionnement de la pièce manufacturée, même si celle-ci est un équipement électronique. Par ailleurs, la mesure d'au moins une caractéristique du champ magnétique au voisinage de la pièce manufacturée comprenant le marqueur permet de déduire une réponse de la pièce manufacturée qui peut être comparée à une réponse magnétique de référence. On peut ainsi contrôler, mesurer ou authentifier la pièce manufacturée comprenant le marqueur, notamment en :

- vérifiant/contrôlant une similitude de la réponse de la pièce manufacturée comprenant le marqueur avec une réponse magnétique de référence, et/ou

- mesurant une différence de la réponse de la pièce manufacturée comprenant le marqueur avec la réponse magnétique de référence,
- comparant la réponse de la pièce manufacturée comprenant le marqueur avec des gabarits construits autour de la réponse magnétique de référence... Ainsi, la pièce manufacturée comprenant le marqueur peut être contrôlée, mesurée ou authentifiée rapidement, sans affecter son fonctionnement, et sans nécessairement devoir la démonter.

De manière plus générale, on peut prévoir une méthode de contrôle d'une pièce manufacturée comprenant au moins un marqueur agencé pour modifier la réponse magnétique donnée de la pièce manufacturée, ou d'un marqueur agencé pour modifier la réponse magnétique donnée de la pièce manufacturée, la méthode de contrôle comprenant une phase de contrôle avec les étapes consistant à :

- placer la pièce manufacturée comprenant le marqueur, ou le marqueur de la pièce manufacturée, à une position relative prédéterminée par rapport à au moins une source de champ magnétique et/ou par rapport à au moins un dispositif de mesure de champ magnétique,
- exposer la pièce manufacturée comprenant le marqueur, ou le marqueur de la pièce manufacturée, à au moins un champ magnétique prédéterminé et variable au cours du temps généré par la source de champ magnétique,
- mesurer, au moyen d'au moins un dispositif de mesure de champ magnétique, au moins une caractéristique du champ magnétique au voisinage de la pièce manufacturée comprenant le marqueur, ou du marqueur de la pièce manufacturée, exposé(e) au champ magnétique prédéterminé et variable au cours du temps,
- déduire une réponse magnétique de la pièce manufacturée comprenant le marqueur, ou du marqueur de la pièce manufacturée, à partir de la caractéristique mesurée du champ magnétique au voisinage de la pièce manufacturée, ou du composant de la pièce manufacturée,
- comparer la réponse magnétique de la pièce manufacturée comprenant le marqueur, ou du marqueur de la pièce manufacturée, à une réponse magnétique de référence.

En particulier, l'invention peut se rapporter à une méthode de contrôle d'une pièce manufacturée, susceptible de comprendre au moins un marqueur agencé pour modifier la réponse magnétique donnée de la pièce manufacturée, la méthode de contrôle comprenant les étapes consistant à :

- placer la pièce manufacturée, ou au moins une partie de la pièce manufacturée, à une position relative prédéterminée par rapport à au moins une source de champ magnétique et/ou par rapport à au moins un dispositif de mesure de champ magnétique,
- exposer la pièce manufacturée, ou au moins une partie de la pièce manufacturée, à au moins un champ magnétique prédéterminé et variable au cours du temps généré par la source de champ magnétique,
- mesurer, au moyen d'au moins un dispositif de mesure de champ magnétique, au moins une caractéristique du champ magnétique au voisinage de la pièce manufacturée exposée au champ magnétique prédéterminé et variable au cours du temps,
- déduire une réponse magnétique de la pièce manufacturée à partir de la caractéristique mesurée du champ magnétique au voisinage de la pièce manufacturée,
- comparer la réponse magnétique de la pièce manufacturée à une réponse magnétique de référence pour vérifier/contrôler si la pièce manufacturée comprend le marqueur.

Selon un mode de réalisation, au cours de l'étape d'exposition de la pièce manufacturée au champ magnétique prédéterminé et variable au cours du temps, au moins :

- une amplitude, et/ou
- une fréquence, et/ou
- une orientation, et/ou
- un gradient spatial,

du champ magnétique généré par la source de champ magnétique, est modifié(e) ou variable au cours du temps. Comme vu ci-dessus, l'exposition de la pièce manufacturée comprenant un marqueur à un tel champ magnétique variable au cours du temps n'est pas préjudiciable au fonctionnement de la pièce manufacturée.

Selon un mode de réalisation, au cours de l'étape d'exposition de la pièce manufacturée comprenant un marqueur au champ magnétique prédéterminé et variable au cours du temps, la fréquence du champ magnétique prédéterminé est comprise dans une plage de fréquences allant de 10 Hz à $10^7$ Hz.

Selon un mode de réalisation, au cours de l'étape d'exposition de la pièce manufacturée comprenant un marqueur au champ magnétique prédéterminé et variable au cours du temps, l'amplitude du champ magnétique prédéterminé est modifiée au cours du temps pour obtenir un champ magnétique pulsant, de préférence selon une fonction sinusoïdale.

Selon un mode de réalisation, au cours de l'étape d'exposition de la pièce manufacturée comprenant un marqueur au champ magnétique prédéterminé et variable au cours du temps, l'amplitude du champ magnétique prédéterminé est comprise dans une plage de valeur allant de 0 T à $5.10^{-1}$ T et de préférence dans une plage de valeur allant de 0 T à $5.10^{-3}$ T, et de préférence dans une plage de valeur allant de 0 T à 10$^{-3}$ T.

Selon un mode de réalisation, au cours de l'étape d'exposition de la pièce manufacturée comprenant un marqueur au champ magnétique prédéterminé et variable au cours du temps, un mouvement relatif entre la pièce manufacturée comprenant un marqueur et la source de champ magnétique est imposé. Un tel déplacement relatif permet d'exposer la pièce manufacturée comprenant un marqueur à un champ magnétique variable, même si la source de champ magnétique génère un champ magnétique constant ou fixe.

Selon un mode de réalisation, au cours de l'étape d'exposition de la pièce manufacturée comprenant un marqueur au champ magnétique prédéterminé et variable au cours du temps, l'orientation du champ magnétique prédéterminé varie d'au moins 10°, et de préférence d'au moins 30°, par rapport à une orientation initiale du champ magnétique prédéterminé. On peut prévoir de générer un champ magnétique tournant, même sur un secteur angulaire limité, par exemple inférieur à 360°.

Selon un mode de réalisation, au cours de l'étape d'exposition de la pièce manufacturée comprenant un marqueur au champ magnétique prédéterminé et variable au cours du temps, l'orientation du champ magnétique prédéterminé varie de manière cyclique, et par exemple l'orientation du champ magnétique prédéterminé varie pour imposer un champ magnétique tournant, par exemple à une fréquence d'au moins 50 tours/seconde, et de préférence d'au moins 5.10$^2$ tours/seconde.

Selon un mode de réalisation, l'étape d'exposition de la pièce manufacturée comprenant un marqueur au champ magnétique prédéterminé et variable au cours du temps comprend une étape consistant à alimenter électriquement au moins une bobine électrique, voire au moins deux bobines électriques de manière simultanée ou décalée dans le temps (si par exemple la pièce manufacturée comprend au moins deux marqueurs distincts).

Selon un mode de réalisation, l'étape de mesure d'au moins une caractéristique du champ magnétique au voisinage de la pièce manufacturée comprenant un marqueur comprend la mesure :

- d'une amplitude et/ou d'une orientation du champ magnétique, et/ou
- d'un courant induit dans une bobine, et/ou
- d'une tension induite dans une bobine.

Selon un mode de réalisation, l'étape de mesure d'au moins une caractéristique du champ magnétique au voisinage de la pièce manufacturée comprenant un marqueur est effectuée:

- par au moins un capteur de champ magnétique, et/ou
- par au moins une bobine électrique dite bobine réceptrice, de préférence par au moins une bobine de la source de champ magnétique, dite bobine émettrice et réceptrice, utilisée pour générer le champ magnétique prédéterminé et variable au cours du temps. L'utilisation d'une bobine émettrice et réceptrice permet de proposer un équipement de mesure simple, avec un nombre limité de composants.

Selon un mode de réalisation, l'étape consistant à déduire la réponse magnétique de la pièce manufacturée comprenant un marqueur comprend :

- une comparaison entre une valeur d'une caractéristique du champ magnétique mesurée sans la pièce manufacturée, et une valeur de la caractéristique du champ magnétique mesurée au voisinage de la pièce manufacturée comprenant un marqueur, et/ou
- un calcul de déphasage entre le champ magnétique généré et une valeur de la caractéristique du champ magnétique mesurée au voisinage de la pièce manufacturée comprenant un marqueur,
- une phase d'analyse avec une construction d'un diagramme de Bode, et/ou un diagramme de Nyquist, et/ou une décomposition en série de Fourier. Le fait de placer la pièce manufacturée dans un champ magnétique variable modifie la répartition et l'amplitude du champ magnétique dans et autour de la pièce manufacturée comprenant un marqueur. Ce champ magnétique résultant modifié est mesuré et analysé pour en déduire la réponse magnétique de la pièce manufacturée comprenant un marqueur.

Selon un mode de réalisation, la méthode de contrôle comprend une phase initiale de prise de référence avec les étapes consistant à :

- placer une pièce manufacturée de référence (comprenant un marqueur de référence) à la position relative prédéterminée par rapport à ladite au moins une source de champ magnétique et par rapport au dit au moins un dispositif de mesure de champ magnétique,
- exposer la pièce manufacturée de référence au dit au moins un champ magnétique prédéterminé et variable au cours du temps généré par la source de champ magnétique,
- mesurer au moins une caractéristique du champ magnétique au voisinage de la pièce manufacturée de référence exposée au champ magnétique prédéterminé et variable au cours du temps,
- déduire une réponse magnétique de la pièce manufacturée de référence à partir de la caractéristique mesurée du champ magnétique au voisinage de la pièce manufacturée,
- enregistrer la réponse magnétique de la pièce manufacturée de référence.

Selon un mode de réalisation, l'étape consistant à placer la pièce manufacturée comprenant un marqueur à une position relative prédéterminée par rapport à au moins une source de champ magnétique et par rapport à au moins un dispositif de mesure de champ magnétique comprend une étape consistant à placer la pièce manufacturée comprenant un marqueur dans un posage et/ou à brider la pièce manufacturée comprenant un marqueur dans un posage, et/ou à mettre la pièce manufacturée comprenant un marqueur en butée mécanique sur ou dans un posage. Selon un mode de réalisation, les étapes consistant à placer la pièce manufacturée comprenant un marqueur dans un posage et/ou à brider la pièce manufacturée comprenant un marqueur dans un posage, et/ou à mettre la pièce manufacturée comprenant un marqueur en butée mécanique sur ou dans un posage sont effectuées avec mise en contact ou en butée de la pièce manufacturée comprenant un marqueur avec une portion de positionnement de ladite au moins une source de champ magnétique. Ainsi, la position relative, entre la pièce manufacturée comprenant un marqueur et la source de champ magnétique et/ou le dispositif de mesure, est reproductible, fiable et robuste.

Selon un mode de réalisation, l'étape consistant à placer la pièce manufacturée comprenant un marqueur à une position relative prédéterminée par rapport à au moins une source de champ magnétique et par rapport à au moins un dispositif de mesure de champ magnétique comprend une étape consistant à placer la pièce manufacturée comprenant un marqueur à moins de 10 mm, de préférence à moins de 7 mm, de préférence à moins de 5 mm, de préférence à moins de 2 mm, de préférence à moins de 1 mm, par rapport à au moins une source de champ magnétique et/ou par rapport à au moins un dispositif de mesure de champ magnétique, et très préférentiellement, la pièce manufacturée comprenant un marqueur est placée en contact avec ladite au moins une source de champ magnétique et/ou avec ledit au moins un dispositif de mesure de champ magnétique. Ainsi, la pièce manufacturée comprenant un marqueur est bien exposée au champ magnétique (de même que le marqueur), et/ou se trouve à proximité du dispositif de mesure, ce qui garantit des mesures fiables, avec un bon ratio signal/bruit.

Selon un mode de réalisation, l'étape consistant à exposer la pièce manufacturée comprenant un marqueur à un champ magnétique prédéterminé et variable au cours du temps généré par la source de champ magnétique, et/ou l'étape consistant à mesurer au moins une caractéristique du champ magnétique au voisinage de la pièce manufacturée comprenant un marqueur exposée au champ magnétique prédéterminé et variable au cours du temps sont effectuées au moins partiellement simultanément.

Selon un mode de réalisation, l'étape consistant à exposer la pièce manufacturée comprenant un marqueur à un champ magnétique prédéterminé et variable au cours du temps généré par la source de champ magnétique, et l'étape consistant à mesurer au moins une caractéristique du champ magnétique au voisinage de la pièce manufacturée comprenant un marqueur exposée au champ magnétique prédéterminé et variable au cours du temps sont effectuées sur une durée inférieure à 2 minutes, de préférence inférieure à 1 minute, de préférence inférieure à 10 s, de préférence inférieure à 7 s, de préférence inférieure à 5 s, de préférence inférieure à 3 s.

Selon un mode de réalisation, l'étape consistant à exposer la pièce manufacturée comprenant un marqueur à un champ magnétique prédéterminé et variable au cours du temps généré par la source de champ magnétique comprend :

- une première partie de contrôle consistant à exposer une première portion de la pièce manufacturée comprenant par exemple un premier marqueur à un premier champ magnétique prédéterminé et variable au cours du temps généré par la source de champ magnétique,
- une deuxième partie de contrôle consistant à exposer une deuxième portion de la pièce manufacturée comprenant par exemple un deuxième marqueur à un deuxième champ magnétique prédéterminé et variable au cours du temps généré par la source de champ magnétique. On peut ainsi prévoir de contrôler / mesurer / authentifier des parties distinctes d'une même pièce manufacturée comprenant un ou plusieurs marqueurs. On peut même reconstruire un codage en plaçant ou non des marqueurs à des endroits prédéterminés de la pièce manufacturée. La présence d'un marqueur peut former un « 1 » d'un code binaire, et l'absence peut former un « 0 ».

Selon un mode de réalisation, la méthode de contrôle forme une méthode de contrôle mise en oeuvre après une opération particulière de fabrication de la pièce manufacturée comprenant un marqueur. On peut prévoir de contrôler une opération d'assemblage, pour vérifier que tous les composants sont présents et/ou agencés au bon endroit. On peut aussi prévoir de faire un contrôle « à neuf » juste après fabrication pour enregistrer la réponse afin de pouvoir la comparer lors de retours en atelier de maintenance, jusqu'à plusieurs années plus tard.

Selon un mode de réalisation, la méthode de contrôle forme une méthode d'authentification de la pièce manufacturée comprenant un marqueur, mise en oeuvre par exemple lors, ou en préalable d'une opération de maintenance. Selon un mode de réalisation, la méthode d'authentification comprend une phase initiale de constitution de signature avant livraison, comprenant les étapes, mises en oeuvre par exemple lors d'un contrôle final de fabrication, consistant à :

- placer la pièce manufacturée neuve et comprenant un marqueur à la position relative prédéterminée par rapport à ladite au moins une source de champ magnétique et par rapport au dit au moins un dispositif de mesure de champ magnétique,

- exposer la pièce manufacturée neuve et comprenant un marqueur au dit au moins un champ magnétique prédéterminé et variable au cours du temps généré par la source de champ magnétique,
- mesurer au moins une caractéristique du champ magnétique au voisinage de la pièce manufacturée neuve et comprenant un marqueur exposée au champ magnétique prédéterminé et variable au cours du temps,
- déduire une réponse magnétique de la pièce manufacturée neuve et comprenant un marqueur à partir de la caractéristique mesurée du champ magnétique au voisinage de la pièce manufacturée neuve et comprenant un marqueur,
- enregistrer la réponse magnétique de la pièce manufacturée neuve et comprenant un marqueur en tant que réponse magnétique de référence.

Selon un mode de réalisation, la réponse magnétique de la pièce manufacturée neuve et comprenant un marqueur forme une signature de référence, et/ou la réponse magnétique de la pièce manufacturée à contrôler forme une signature de la pièce manufacturée comprenant un marqueur.

Selon un mode de réalisation, la méthode de contrôle comprend une phase finale comprenant les étapes consistant à :

- quantifier une différence entre la réponse magnétique de la pièce manufacturée comprenant un marqueur et la réponse magnétique de référence, et/ou
- comparer avec un seuil prédéterminé une différence entre la réponse magnétique de la pièce manufacturée comprenant un marqueur et la réponse magnétique de référence, et/ou
- qualifier la pièce manufacturée comprenant un marqueur contrôlée de pièce manufacturée conforme ou de pièce manufacturée authentique, notamment si une différence entre la réponse magnétique de la pièce manufacturée comprenant un marqueur et la réponse magnétique de référence est inférieure à un seuil prédéterminé et/ou est acceptable.

Selon un mode de réalisation, au cours de l'étape d'exposition de la pièce manufacturée comprenant un marqueur au champ magnétique prédéterminé et variable au cours du temps, au moins :

- une amplitude, et/ou
- une fréquence, et/ou
- une orientation, et/ou
- un gradient spatial,

du champ magnétique généré par la source de champ magnétique, présente une dérivée au cours du temps différente de zéro, pendant au moins 10 ns, de préférence au moins 100 ns, de préférence au moins 1 $\mu$s, de

préférence au moins 100 $\mu$s, de préférence au moins 1 ms, de préférence au moins 1 s, de préférence au moins 10 s, de préférence au moins 1 minute. Cependant, il n'est pas exclu de prévoir des intervalles de temps pendant lesquels le champ magnétique ne varie pas, même si de manière préférée, le champ magnétique varie tout au long de l'exposition au champ magnétique.

Selon un mode de réalisation, la source de champ magnétique comprend au moins un aimant, comme par exemple un aimant permanent, et l'étape consistant à exposer la pièce manufacturée à au moins un champ magnétique prédéterminé et variable au cours du temps généré par la source de champ magnétique comprend une étape consistant à imposer au moins un mouvement relatif entre la source de champ magnétique et la pièce manufacturée comprenant un marqueur.

Selon un mode de réalisation, ledit au moins un champ magnétique prédéterminé et variable au cours du temps dont l'amplitude présente une forme sinusoïdale, et/ou rectangulaire, et/ou triangulaire, et/ou un saut, et/ou une séquence binaire pseudo-aléatoire (pseudorandom binary sequence, PRBS en langue anglaise) et/ou un signal multifréquence (somme de plusieurs sinusoïdes de fréquences différentes choisies). On peut noter que le courant électrique générant le champ magnétique prédéterminé et variable au cours du temps présente également cette allure temporelle sinusoïdale, rectangulaire, etc.

Selon un mode de réalisation, on peut prévoir de faire la mesure en faisant varier progressivement la fréquence avec par exemple une mesure à une première fréquence $f_1$ pendant une certaine durée (quelques périodes), une mesure à une deuxième fréquence $f_2$ pendant un certain temps (quelques périodes), etc.

Selon un mode de réalisation, on peut prévoir de faire la mesure avec un signal multifréquence (qui comporte une sinusoïde de première fréquence $f_1$ et d'amplitude $a_1$, une sinusoïde de deuxième fréquence $f_2$ et d'amplitude $a_2$, une sinusoïde de troisième fréquence $f_3$ et d'amplitude $a_3$, etc.) ce qui permet de faire le test rapidement, avec un seul signal qui comporte les différentes fréquences souhaitées.

Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :

[fig. 1] représente de manière schématique à un instant donné des lignes de champ d'un champ magnétique variable généré par une bobine émettrice avec une première fréquence ;

[fig. 2] représente de manière schématique les lignes de champ du champ magnétique variable généré par la bobine émettrice, lorsqu'une pièce manufacturée est placée à proximité de la bobine émettrice ;

[fig. 3] représente de manière schématique les lignes de champ du champ magnétique variable généré par la bobine émettrice avec une deuxième fréquence, lorsque la pièce manufacturée est toujours placée à proximité de la bobine émettrice ;

[fig. 4] représente de manière schématique une pièce manufacturée similaire à la pièce manufacturée des figures 2 et 3, comprenant un marqueur prévu pour procurer à la pièce manufacturée marquée une réponse magnétique spécifique et prédéterminée;

[fig. 5] représente la pièce manufacturée comprenant un marqueur de la figure 4, installée à proximité d'une source de champ magnétique et d'un dispositif de mesure formant ensemble une première variante d'un dispositif de contrôle pour mesurer une réponse magnétique de la pièce manufacturée à une exposition à un champ magnétique variable ;

[fig. 6] représente la pièce manufacturée comprenant un marqueur de la figure 4, installée à proximité d'une deuxième variante d'un dispositif de contrôle pour mesurer une réponse magnétique de la pièce manufacturée à une exposition à un champ magnétique variable ;

[fig. 7] représente une variante de la pièce manufacturée comprenant un marqueur de la figure 4, installée à proximité d'une troisième variante d'un dispositif de contrôle pour mesurer une réponse magnétique de la variante de la pièce manufacturée comprenant un marqueur à une exposition à un champ magnétique variable ;

[fig. 8] représente une variante de la pièce manufacturée de la figure 7, installée à proximité de la troisième variante d'un dispositif de contrôle pour mesurer une réponse magnétique de la variante de la pièce manufacturée comprenant un marqueur à une exposition à un champ magnétique variable ;

[fig. 9] représente de manière générale des variantes de réalisation concrètes de la source de champ magnétique, pour exposer la pièce manufacturée comprenant un marqueur à un champ magnétique variable ;

[fig. 10] représente un graphique représentant des réponses magnétiques de plusieurs pièces manufacturées, mesurées avec la méthode de contrôle mise en oeuvre par le dispositif de contrôle de la figure 5 par exemple ;

[fig. 11] représente un graphique représentant un exemple de signal variable pouvant être utilisé lors de la mise en oeuvre de la présente méthode de contrôle.

Description détaillée de mode(s) de réalisation

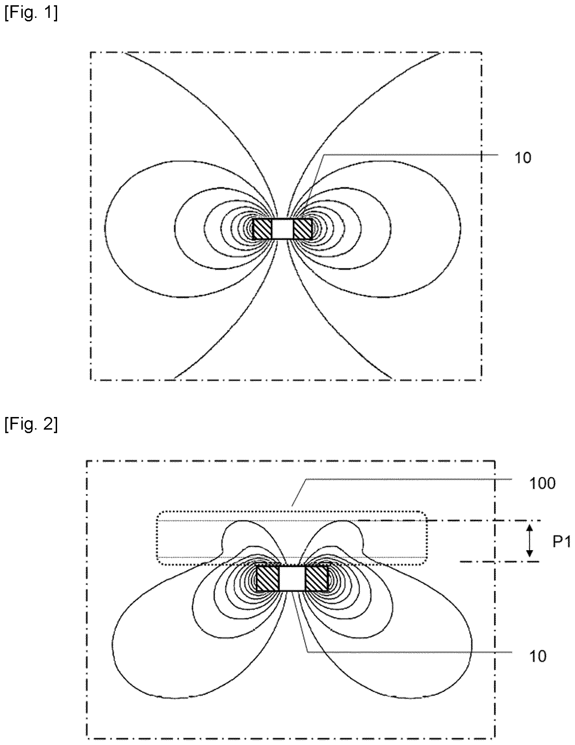

La figure 1 représente de manière schématique à un instant donné des lignes de champ d'un champ magnétique variable généré par une bobine émettrice 10 avec une première fréquence. Dans l'exemple donné, la bobine émettrice 10 est statique, et la bobine émettrice 10 est alimentée avec un courant électrique variable, et la figure 1 représente la répartition des lignes de champ à un instant donné. Dans le cas représenté, la bobine est circulaire avec une section carrée. Le modèle ou la répartition des lignes de champ :

- est axisymétrique autour de l'axe vertical de la bobine de la figure 1 ;
- est symétrique par rapport à un plan parallèle à la face supérieure ou inférieure de la bobine émettrice 10 et qui passe par le centre de la bobine émettrice 10. Dans le cas de la figure 1, et pour le reste de la divulgation, la figure 1 représente une bobine émettrice 10 seule, mais on peut prévoir un noyau ou une carcasse par exemple en matériau avec une forte perméabilité magnétique (par exemple un matériau ferromagnétique) pour diriger ou concentrer les lignes de champ magnétique d'une manière particulière.

La figure 2 représente de manière schématique les lignes de champ du champ magnétique variable généré par la bobine émettrice 10, lorsqu'une pièce manufacturée 100 (représentée en traits pointillés figure 2) est placée à proximité de la bobine émettrice 10. Dans l'exemple donné et comme dans l'exemple de la figure 1, la bobine émettrice 10 est toujours statique, et la bobine émettrice 10 est alimentée avec un courant électrique variable (typiquement un courant alternatif, par exemple un courant sinusoïdal ou en créneaux), la figure 2 représente la répartition des lignes de champ à un instant donné. On peut noter que la pièce manufacturée 100 modifie notablement la répartition de lignes de champ par rapport au cas de la figure 1.

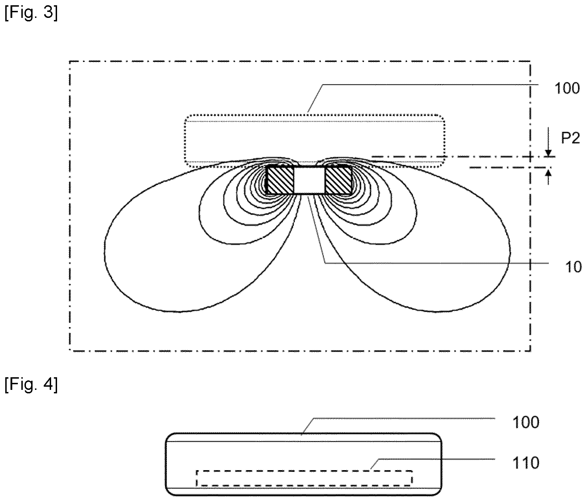

Comme bien connu, un champ magnétique, dont l'amplitude varie au cours du temps, induit des tensions électriques dans tout matériau conducteur placé dans ce champ (typiquement un composant de la pièce manufacturée représentée figure 2 ou 3). Ces tensions induites provoquent l'apparition de boucles de courants induits, appelés courants de Foucault, dont le sens est donné par la loi de Lenz. Selon la loi de Lenz, le sens du courant induit est tel que, par ses effets, il s'oppose à la cause qui lui a donné naissance. Les courants de Foucault circulent donc dans un sens créant un champ opposé au champ qui leur a donné naissance, ce qui modifie la répartition du champ magnétique.

On peut donc observer figure 2 que le champ magnétique, généré par la bobine émettrice 10 à la première fréquence, présente des lignes de champ modifiées par rapport aux lignes de champ de la figure 1. En particulier, on peut noter la présence de lignes de champ au sein même de la pièce manufacturée 100, à une première profondeur P1 par rapport au fond de la pièce manufacturée 100.

La figure 3 représente de manière schématique les lignes de champ du champ magnétique variable généré par la bobine émettrice 10 avec une deuxième fréquence, lorsque la pièce manufacturée 100 (représentée en traits pointillés) est toujours placée à proximité de la bobine émettrice 10.

Dans l'exemple donné figure 3, la bobine émettrice 10 est alimentée avec un courant électrique variable (un courant alternatif comme un courant sinusoïdal ou en créneaux) présentant une deuxième fréquence, et la deuxième fréquence est supérieure à la première fréquence utilisée pour illustrer les figures 1 et 2.

En comparant les figures 2 et 3, on peut noter une modification significative de la répartition des lignes de champ au sein même de la pièce manufacturée 100 sur la figure 3. En particulier, on peut noter figure 3 des lignes de champ à une deuxième profondeur P2 par rapport au fond de la pièce manufacturée 100, la deuxième profondeur P2 étant inférieure à la première profondeur P1.

En résumé et comme montré figures 1 à 3, les lignes de champ sont modifiées par la simple présence de la pièce manufacturée 100. Selon la présente invention, on peut prévoir d'équiper la pièce manufacturée 100 avec un marqueur prévu pour procurer à la pièce manufacturée marquée une réponse magnétique spécifique et prédéterminée. En d'autres termes, et en particulier, et en référence à la figure 4 qui forme un schéma de principe, la pièce manufacturée 100 comprend un marqueur 110 qui par sa présence permet de mesurer une réponse magnétique spécifique et à tout le moins mesurable et différente de la même pièce manufacturée sans le marqueur 110.

La pièce manufacturée 100 peut être tout type de pièce fabriquée à la main ou par une machine. Sur les figures 2 à 7, la pièce manufacturée 100 est très schématique et présente une forme générale circulaire et cylindrique avec une face inférieure (un fond) et une face supérieure. Il peut s'agir d'un emballage (une boîte ronde prévue pour contenir des médicaments, des produits alimentaires...), d'un article électronique (un pacemaker, une enceinte...), d'une pièce mécanique (une poulie, un disque de frein...), un accessoire de mode (un stylo en argent, une boucle de ceinture en or, ...), un objet de décoration (un vase ou une sculpture en métal), un objet d'ameublement (couverts en argent, couteaux, lustres en laiton,...) , un vêtement,...

Le marqueur 110 peut être formé par :

- tout ou partie de la paroi extérieure de la pièce manufacturée (le fond, le couvercle, ...),
- tout ou partie d'un composant interne de la pièce manufacturée 100, comme par exemple un composant d'un mécanisme, une vis d'assemblage... Selon un mode de réalisation, le marqueur 110 peut être le seul composant conducteur de l'électricité de la pièce manufacturée 100.

Le marqueur 110 peut typiquement comprendre au moins une partie en métal, et on peut prévoir de former au moins en partie le marqueur 110 avec un alliage tel que de l'acier, de l'acier inoxydable (par exemple selon une nuance 1.4404 (ou AISI 316L), ou une nuance 1.4539 (ou AISI 904L), ou du laiton, ou un alliage de cuivre, de titane, d'or, de platine...

Le marqueur 110 peut être formé par un revêtement de matière sur un composant de la pièce manufacturée 100. On peut prévoir une modification locale de la matière d'un composant de la pièce manufacturée 100, par exemple un traitement laser localisé et/ou une implantation ionique localisée et/ou le dépôt localisé d'une couche suivi d'un traitement thermique de diffusion et/ou un traitement local de carburation/nitruration/oxydation (ou leurs combinaisons), en vue de modifier les propriétés électriques et/ou magnétiques, par exemple en induisant un changement de phase, une modification de la structure cristalline, une modification de la composition chimique...

Le marqueur 110 peut être formé par un composant de la pièce manufacturée 100 qui a subi un traitement thermique particulier. Par exemple, un recuit thermique effectué entre 500°C et 1200°C sur un composant comprenant FeCo et/ou FeNi, et/ou FeSi, peut permettre de former un marqueur qui imposera une réponse magnétique spécifique à la pièce manufacturée 100.

Le marqueur 110 peut être formé dans un matériau dont la réponse magnétique varie en fonction de la température. Par exemple on peut former le marqueur 110 avec un matériau dont la température de Curie est comprise entre 250K et 400K. Au dessous d'un point de température défini par les propriétés physiques du matériau (point de Curie), celui-ci se comporte comme une matière ferromagnétique, c'est-à-dire qu'il conduit et canalise avec facilité les lignes de champ. Pour une température supérieure à la température de Curie, le matériau se comporte de manière paramagnétique, il laisse passer les lignes de champ sans les influencer, comme de l'air. On peut prévoir par exemple d'utiliser du gadolinium.

Le marqueur 110 peut être formé par une bobine électrique ou une partie de bobine électrique.

Le marqueur 110 peut alternativement être un évidement de matière ou un insert non-conducteur de l'électricité, ménagé ou embarqué dans un composant normalement présent dans la pièce manufacturée et conducteur de l'électricité. La présence du marqueur (occupant typiquement un volume normalement occupé par une matière conductrice de l'électricité) va alors modifier notablement la réponse magnétique de la pièce manufacturée 100 à l'exposition au champ magnétique variable.

Le marqueur 110 peut tout aussi bien être une pièce isolante de l'électricité intercalée dans une pièce conductrice de l'électricité ou entre deux pièces conductrices de l'électricité. On peut prévoir une pièce en plastique, un film isolant, une couche d'oxyde isolante... La présence du marqueur 110 va alors modifier notablement les trajets des courants électriques induits et donc la réponse magnétique de la pièce manufacturée 100 à l'exposition au champ magnétique variable.

Le marqueur 110 peut enfin être une pièce magnétique, c'est-à-dire un aimant permanent collé ou agencé dans la pièce manufacturée 100 pour en modifier la réponse magnétique.

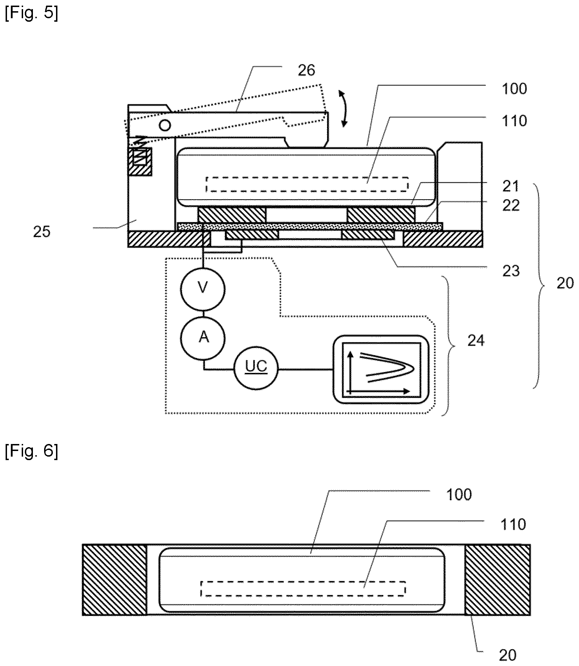

La figure 5 représente la pièce manufacturée 100 de la figure 4, comprenant le marqueur 110, installée à proximité d'une source de champ magnétique 21 et d'un dispositif de mesure 23 formant ensemble une première variante d'un dispositif de contrôle 20 pour mesurer une réponse magnétique de la pièce manufacturée 100 comprenant le marqueur 110 à une exposition à un champ magnétique variable.

Dans le détail, le dispositif de contrôle 20 comprend :

- la source de champ magnétique 21 formée par une bobine électrique que l'on peut qualifier de bobine émettrice,
- le dispositif de mesure 23 formé par une bobine électrique que l'on peut qualifier de bobine réceptrice
- un posage 25 formant une empreinte pour recevoir la pièce manufacturée 100 comprenant le marqueur 110 sans jeu afin de garantir un positionnement relatif fiable et répétable entre la pièce manufacturée 100 comprenant le marqueur 110 et la source de champ magnétique 21 et/ou le dispositif de mesure 23,
- des moyens de bridage 26 optionnels, avec ici un bras articulé qui vient plaquer la pièce manufacturée 100 comprenant le marqueur 110 contre la source de champ magnétique 21,
- un dispositif d'acquisition et de commande 24, comprenant notamment :

  • au moins un dispositif de mesure de tension V, relié à la source de champ magnétique 21 et/ou au dispositif de mesure 23,
  • au moins un dispositif de mesure de courant A, relié à la source de champ magnétique 21 et/ou au dispositif de mesure 23,
  • au moins une unité de commande UC (pouvant comprendre une unité de commande électronique, une unité de mémoire, une unité de calcul, un générateur de courant, un générateur de tension, des moyens internes de mesure de tension ou de courant, une unité de communication ...) reliée à la source de champ magnétique 21 et/ou au dispositif de mesure 23, au dispositif de mesure de tension V, au dispositif de mesure de courant A,
  • un dispositif d'affichage, pouvant aussi former une interface homme machine pour recevoir des instructions de commande de la part d'un opérateur.

L'unité de commande UC est prévue pour générer et imposer un courant électrique dans la source de champ magnétique 21 de manière à exposer la pièce manufacturée 100 comprenant le marqueur 110 à un champ magnétique variable au cours du temps dont la fréquence du champ magnétique prédéterminé est comprise dans une plage de fréquences allant de 10 Hz à $10^7$ Hz.

Si par exemple le marqueur 110 est agencé en surface (ou proche de la surface) de la pièce manufacturée, on peut prévoir que la fréquence du champ magnétique prédéterminé est comprise dans une plage de fréquences allant de $5.10^2$ Hz à $10^7$ Hz, de préférence de $10^4$ Hz à $10^7$ Hz, pour se rapprocher du cas illustré figure 3.

Si par exemple le marqueur 110 est agencé loin de la surface (ou proche du centre) de la pièce manufacturée, on peut prévoir que la fréquence du champ magnétique prédéterminé est comprise dans une plage de fréquences allant de 10 Hz à $10^4$ Hz et de préférence dans une plage de fréquences allant de $5.10^2$ Hz à $5.10^3$ Hz, pour se rapprocher du cas illustré figure 2.

On peut aussi prévoir de faire varier la fréquence du champ magnétique prédéterminé, de sorte à couvrir toute une plage de fréquences comprise dans une plage de fréquences générale allant de 10 Hz à $10^7$ Hz. Ainsi, toute la pièce manufacturée 100 comprenant le marqueur 110 sera contrôlée / mesurée / authentifiée. Typiquement, on peut appliquer un signal multifréquences avec un courant dont l'allure temporelle est la somme de sinusoïdes de différentes fréquences $f_1$, $f_2$, $f_3$, etc. choisies de manière judicieuse. Typiquement, on peut choisir de faire varier la fréquence du champ magnétique prédéterminé selon une séquence binaire pseudo-aléatoire (pseudorandom binary sequence, PRBS en langue anglaise).

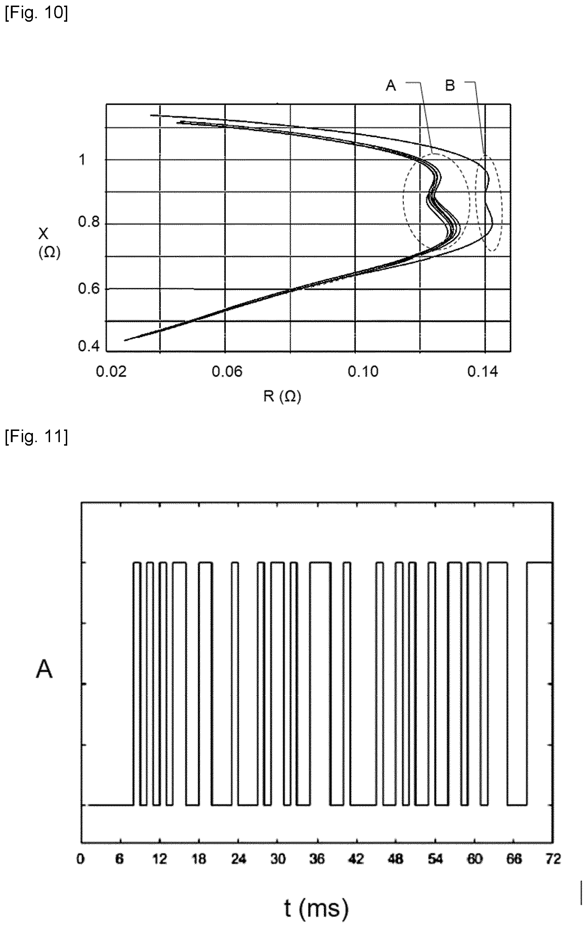

A titre d'exemple, la figure 11 montre un exemple de signal pouvant être utilisé pour faire varier la fréquence du champ magnétique prédéterminé. La figure 11 montre un exemple de courant électrique que l'on peut imposer dans la source de champ magnétique 21. Sur la figure 11, le signal présente une amplitude A variant par exemple de 0% à 100% d'une pleine échelle, et présentant une fréquence variable en fonction du temps. L'amplitude A du signal de la figure 11 est de forme générale carrée ou en créneaux. On peut prévoir un signal multifréquences que l'on peut décomposer en série de Fourier par exemple.

D'une manière générale, l'unité de commande UC est prévue pour générer et imposer un courant électrique dans la source de champ magnétique 21 de manière à exposer la pièce manufacturée 100 comprenant le marqueur 110 à un champ magnétique variable au cours du temps dont l'amplitude du champ magnétique prédéterminé est comprise dans une plage de valeur allant de 0 T à $5.10^{-1}$ T et de préférence dans une plage de valeur allant de 0 T à $5.10^{-3}$ T, et de préférence dans une plage de valeur allant de 0 T à $10^{-3}$ T.

Dans le cas de la figure 5, la source de champ magnétique 21 et le dispositif de mesure 23 sont fixés sur un substrat de carte électronique 22. On peut prévoir de former la source de champ magnétique 21 et le dispositif de mesure 23 avec des circuits imprimés sur le substrat de carte électronique 22. Par exemple, on peut prévoir de former ou imprimer des spires directement sur le substrat de carte électronique 22. On peut prévoir des spires circulaires ou de formes différentes, en fonction de la géométrie de la pièce manufacturée 100 et/ou du marqueur 110.

Le dispositif de contrôle 20 de la figure 5 comprend donc un posage 25 recevant et positionnant :

- d'une part, la source de champ magnétique 21, le dispositif de mesure 23 et le substrat de carte électronique 22,
- d'autre part, la pièce manufacturée 100 comprenant le marqueur 110, via une empreinte ou une contre forme,

si bien que la position relative entre la pièce manufacturée 100 comprenant le marqueur 110, la source de champ magnétique 21, et le dispositif de mesure 23 est fiable et répétable. On peut prévoir des moyens de bridage 26 qui appuient ou plaquent la pièce manufacturée 100 comprenant le marqueur 110 au contact avec la source de champ magnétique 21 par exemple. Ainsi, il n'y a pas d'entrefer entre la pièce manufacturée 100 comprenant le marqueur 110 et la source de champ magnétique 21, si bien que la pièce manufacturée 100 comprenant le marqueur 110 est parfaitement exposée au champ magnétique variable généré par la source de champ magnétique 21.

On peut prévoir de réaliser le posage 25, les moyens de bridage 26, le substrat de carte électronique 22 avec des matériaux non conducteurs de l'électricité et/ou « transparents » aux champs magnétiques, c'est-à-dire avec une perméabilité magnétique relative proche de 1 et/ou des matériaux amagnétiques. On peut prévoir d'utiliser un posage 25, des moyens de bridage 26 en téflon ou en plastique par exemple.

Dans le cas de la figure 5, la source de champ magnétique 21 et le dispositif de mesure 23 sont formés par des bobines distinctes. Le champ magnétique généré en chaque point, dans le voisinage de la source de champ magnétique 21, est variable. Selon la loi de l'induction électromagnétique établie par Faraday, si le flux magnétique couplé avec une spire ou une bobine (le dispositif de mesure 23) varie en fonction du temps, une tension est induite aux bornes de la bobine formant le dispositif de mesure 23. Il en résulte qu'en plaçant le dispositif de mesure 23 dans le voisinage de la source de champ magnétique 21 et de la pièce manufacturée 100 comprenant le marqueur 110 (la pièce manufacturée à contrôler / mesurer / authentifier), une tension induite est générée par le champ variable aux bornes de la bobine du dispositif de mesure 23. Cette tension induite peut servir de base pour déduire la réponse magnétique de la pièce manufacturée 100 comprenant le marqueur 110.

Pour effectuer un contrôle d'une pièce manufacturée 100 (comprenant un marqueur 110) particulière, on peut prévoir de générer avec la source de champ magnétique 21 un même champ magnétique variable au cours du temps, et on peut prévoir de mesurer de manière itérative la tension induite :

- sans aucune pièce manufacturée 100,
- avec une pièce manufacturée 100 de référence (comprenant un marqueur 110 de référence) ;
- avec une pièce manufacturée 100 à contrôler / mesurer / authentifier et comprenant le marqueur 110.

On peut enregistrer ces différentes tensions induites, et on peut alors prévoir de comparer :

- directement la tension induite avec la pièce manufacturée 100 de référence et la tension induite avec la pièce manufacturée 100 comprenant le marqueur 110 à contrôler,
- d'une part la tension induite sans aucune pièce manufacturée 100 et la tension induite avec la pièce manufacturée 100 de référence et d'autre part la tension induite sans aucune pièce manufacturée 100 et la tension induite avec la pièce manufacturée 100 comprenant le marqueur 110 à contrôler.

On peut aussi prévoir de définir une réponse fréquentielle comme étant le rapport entre la tension induite mesurée aux bornes de la bobine (qui est une bobine réceptrice) du dispositif de mesure 23 et la tension appliquée aux bornes de la bobine (qui est une bobine émettrice) de la source de champ magnétique 21, sans courant dans la bobine de mesure.

L'analyse de ces fonctions de transfert pour la pièce manufacturée 100 comprenant le marqueur 110 à contrôler permet le recours à des outils mathématiques. On peut prévoir de faire des représentations dans un graphique de Bode ou de Nyquist qui permettent aussi de comparer des pièces manufacturées mesurées. L'analyse de signaux périodiques non sinusoïdaux peut être réalisée avec une décomposition en série de Fourier.

Ainsi, en comparant les tensions induites selon les différentes options, on peut quantifier un écart entre une réponse magnétique de la pièce manufacturée 100 comprenant le marqueur 110 à contrôler et une réponse magnétique de la pièce manufacturée 100 de référence. Il est alors possible de contrôler / mesurer / authentifier la pièce manufacturée 100 comprenant le marqueur 110 à contrôler en fonction de l'écart identifié (on peut vérifier que l'écart est inférieur à un seuil, on peut vérifier une absence ou une présence d'un paramètre ou d'une forme particulières sur la courbe de réponse...).

On peut noter que dans l'exemple de la figure 5 la bobine réceptrice du dispositif de mesure 23 est agencée sous la bobine émettrice de la source de champ magnétique 21. On peut toutefois choisir d'autres dispositions ou localisations, tant pour la bobine du dispositif de mesure 23 que pour la bobine de la source de champ magnétique 21.

On peut aussi prévoir plusieurs bobines pour le dispositif de mesure 23 et/ou plusieurs bobines pour la source de champ magnétique 21. On peut prévoir d'alimenter simultanément ou séquentiellement une ou plusieurs bobines de la source de champ magnétique 21, et on peut prévoir de mesurer simultanément ou séquentiellement une tension induite aux bornes d'une ou de plusieurs bobines du dispositif de mesure 23.

La figure 6 représente la pièce manufacturée 100 de la figure 4 et comprenant le marqueur 110, installée à proximité d'une deuxième variante d'un dispositif de contrôle 20 pour mesurer une réponse magnétique de la pièce manufacturée 100 comprenant le marqueur 110 à une exposition à un champ magnétique variable. En particulier, la pièce manufacturée 100 comprenant le marqueur 110 est logée dans la deuxième variante d'un dispositif de contrôle 20, et le reste du dispositif de contrôle 20 (similaire à la figure 5) n'est pas représenté. Dans l'exemple de la deuxième variante de réalisation de la figure 6, la pièce manufacturée 100 comprenant le marqueur 110 sera essentiellement exposée à des lignes de champ la traversant et normales à son fond ou à sa face supérieure.

Dans l'exemple de la deuxième variante de réalisation de la figure 6, on peut noter que le dispositif de contrôle 20 ne comprend qu'une seule bobine électrique, que l'on peut qualifier de bobine émettrice-réceptrice. En effet, il est possible d'utiliser une seule bobine, et la mesure du courant et/ou de la tension peut donner les informations nécessaires au contrôle / à la mesure / à l'authentification.

Dans le cas d'une mesure de courant, on peut quantifier des amplitudes et/ou des déphasages du courant (plus précisément l'intensité du courant) lors de tests :

- sans aucune pièce manufacturée 100,
- avec une pièce manufacturée 100 de référence et comprenant un marqueur 110 de référence ;
- avec une pièce manufacturée 100 à contrôler et comprenant un marqueur 110.

Il est possible de faire de même avec la tension aux bornes de la bobine du dispositif de contrôle 20.

Alternativement ou en complément, on peut prévoir de mesurer l'impédance de la bobine émettrice-réceptrice du dispositif de contrôle 20. De manière connue, l'impédance d'une bobine est définie en notation complexe par :

$$\underline{U} = \underline{Z} \cdot \underline{I}$$

avec U la tension aux bornes de la bobine et $\underline{I}$ le courant la traversant. On peut aussi rappeler que toute bobine peut être caractérisée électriquement par une résistance R et par une réactance X (fonction de la pulsation du courant et de l'inductance L de la bobine) formant l'impédance complexe Z.

En présence de matériau conducteur de l'électricité dans une pièce manufacturée à contrôler, la variation de champ et les courants induits provoquent une modification de l'impédance par rapport au cas sans la pièce manufacturée. En particulier, la résistance R prend en compte les pertes par effet Joule internes de la bobine et aussi les pertes par courants de Foucault dans la pièce manufacturée à contrôler. L'inductance L est liée à la répartition des lignes de champ qui sont modifiées par la présence des courants de Foucault dans la pièce manufacturée. La présence d'un marqueur qui modifie spécifiquement et/ou localement la résistance R de la pièce manufacturée ou d'au moins un de ses composants peut permettre de procurer à la pièce manufacturée marquée une réponse magnétique spécifique et prédéterminée.

Les différentes grandeurs sont alors fonction de la fréquence f du champ magnétique variable :

- résistance : R(f),
- inductance : L(f),
- réactance : X(f),
- module de l'impédance : Z(f),
- argument de l'impédance : φ(f).

Selon la matière et les dimensions des composants de la pièce manufacturée et du marqueur 110, ces fonctions sont différentes. Elles peuvent donc être utilisées comme « signature » ou « réponse magnétique » pour caractériser une pièce manufacturée équipée. Dans certains cas, il peut être avantageux de définir des fonctions comportant les mesures avec la pièce manufacturée dépourvue de marqueur, avec la pièce manufacturée équipée du marqueur 110, et sans la pièce manufacturée pour faciliter le traitement mathématique et la représentation graphique.

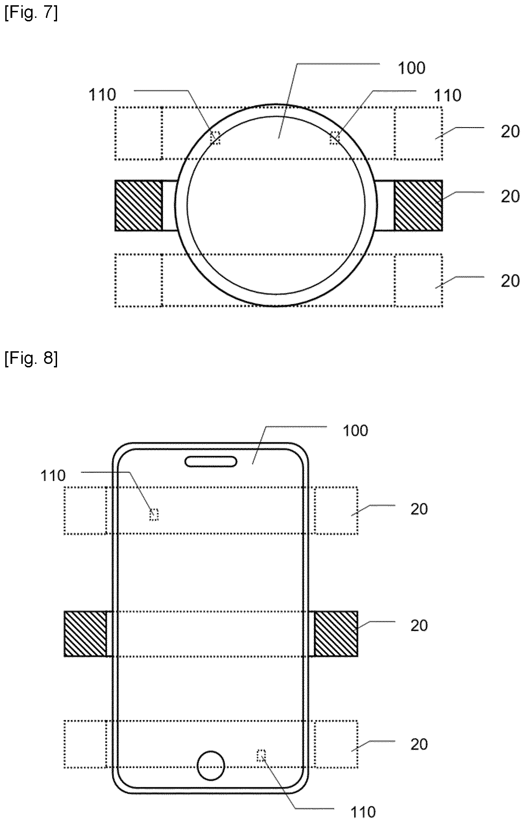

La figure 7 représente une variante de la pièce manufacturée 100 de la figure 4, installée dans une troisième variante d'un dispositif de contrôle pour mesurer une réponse magnétique de la variante de la pièce manufacturée 100 de la figure 4 à une exposition à un champ magnétique variable. Le reste du dispositif de contrôle (similaire à la figure 5) n'est pas représenté.

Sur la figure 7, on peut noter que la pièce manufacturée 100 comprend deux marqueurs 110, chacun logé en périphérie de la pièce manufacturée 100. On peut prévoir d'installer un marqueur 110 à différents endroits de la pièce manufacturée 100. En cas de présence du marqueur 110 à un emplacement, on peut affecter la valeur 1, et en cas d'absence, on peut affecter la valeur 0. Dans le cas de la figure 7, en partant de la gauche vers la droite et du haut vers le bas, on aurait un code 11.

Dans le cas de la troisième variante de dispositif de mesure de la figure 7, le dispositif de contrôle 20 ne comprend qu'une seule bobine électrique qui entoure la pièce manufacturée 100. Cette dernière sera essentiellement exposée à des lignes de champ la traversant et parallèles à son fond ou à face supérieure. Comme le montre la figure 7, on peut prévoir de faire des mesures en plaçant la bobine du dispositif de mesure 20 au niveau d'une partie supérieure, pour bien exposer les marqueurs 110 au champ magnétique variable dans le temps. On peut même prévoir d'utiliser une bobine qui entoure une partie seulement de la pièce manufacturée 100, dans le cas où la pièce manufacturée 100 présente des parties en saillie par exemple.

La figure 8 montre une variante de réalisation dans laquelle la pièce manufacturée est un appareil électronique, et plus particulièrement un téléphone portable. On peut prévoir de loger deux marqueurs 110 spécifiques à des endroits prédéterminés, et lors du passage de la bobine du dispositif de mesure 20 à proximité des deux marqueurs 110, une réponse magnétique spécifique pourra être mesurée. On peut bien entendu prévoir d'utiliser indifféremment le dispositif de mesure 20 de la figure 5, de la figure 6 ou de la figure 7 pour le téléphone portable de la figure 8.

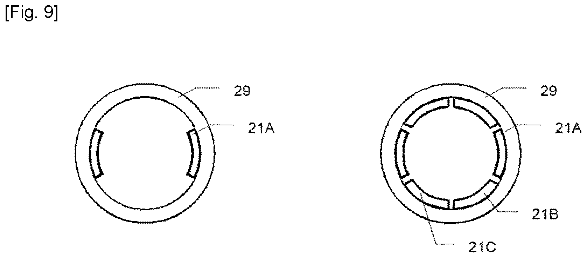

La figure 9 représente de manière générale des variantes de réalisation de la source de champ magnétique 21, pour exposer la pièce manufacturée à un champ magnétique variable.

La figure 9, à gauche, présente un système monophasé à une seule bobine diamétrale 21A avec un cylindre ferromagnétique 29. On comprend qu'avec une seule bobine 21A, on peut générer un champ magnétique variable « pulsant », typiquement en alimentant la bobine 21A avec un courant variable, par exemple un courant sinusoïdal, un courant en créneaux, ou un courant plus généralement variable et alternatif. Si le courant est alternatif et présente une période au cours de laquelle le courant s'inverse, les lignes de champ vont présenter une amplitude variant sur chaque demi-période, et leur sens va s'inverser entre la première demi-période et la deuxième demi-période. Le champ pulse et son sens s'inverse, mais son orientation ne varie pas.

La figure 9, à droite, montre un système triphasé à trois bobines diamétrales 21A, 21B, 21C. Dans ce cas, on peut prévoir d'alimenter les trois bobines 21A, 21B, 21C par un système triphasé de courant, de période T, le champ magnétique tourne par rapport aux bobines 21A, 21B, 21C. L'amplitude du champ, au fil du temps, est constante. Le champ tourne à une vitesse de f tours par seconde. A 1000 Hz, le champ tourne alors à 1000 tr/s.

En référence aux figures 5, 6, 7, 8 et 9, on comprend qu'il est possible de prévoir de nombreuses constructions et possibilités d'agencement tant pour générer le champ magnétique variable que pour le mesurer une fois la pièce manufacturée 100 comprenant le marqueur 110 placée à proximité de la source de champ magnétique. On peut prévoir :

- une bobine émettrice, agencée à une certaine position relative par rapport à la pièce manufacturée 100 comprenant le marqueur 110,
- plusieurs bobines émettrices, placées à diverses positions relatives avec la pièce manufacturée 100 comprenant le marqueur 110,
- une bobine réceptrice, agencée à une certaine position relative par rapport à la pièce manufacturée 100 comprenant le marqueur 110,
- plusieurs bobines réceptrices, placées à diverses positions relatives avec la pièce manufacturée 100 comprenant le marqueur 110,
- une bobine émettrice-réceptrice, agencée à une certaine position relative par rapport à la pièce manufacturée 100 comprenant le marqueur 110,
- plusieurs bobines émettrices-réceptrices, placées à diverses positions relatives avec la pièce manufacturée 100,
- mais on peut aussi prévoir un ou des capteurs de champ magnétique, placé(s) à diverses positions relatives avec la pièce manufacturée 100 comprenant le marqueur 110.

En ce qui concerne le capteur de champ magnétique susmentionné, on peut prévoir un capteur à effet Hall, un capteur magnéto résistif, une magnéto résistance géante, un magnétomètre de type SQUID (« Superconducting QUantum Interférence Device »).

Par ailleurs, on peut aussi prévoir d'imposer un déplacement relatif entre la pièce manufacturée 100 comprenant le marqueur 110 et la source de champ magnétique 21. Dans ce cas, on peut prévoir d'utiliser deux bobines émettrices-réceptrices superposées pour effectuer une mesure différentielle. Les deux bobines émettrices-réceptrices sont alimentées de manière identique à une fréquence donnée pour générer le champ magnétique variable et produire des courants induits dans la pièce manufacturée. Si l'on déplace la pièce manufacturée 100 comprenant le marqueur 110 le long de l'axe des bobines émettrices-réceptrices, la résistance et la réactance des deux bobines émettrices-réceptrices changent en fonction de la position axiale de la pièce manufacturée comprenant le marqueur 110, compte tenu de la géométrie et de la matière de la pièce manufacturée. La mesure des résistances et/ou inductances, réactances et/ou impédances peut alors définir la réponse magnétique qui permet de contrôler / mesurer /authentifier la pièce manufacturée 100 comprenant le marqueur 110.

La figure 10 représente schématiquement un graphique représentant des réponses magnétiques de plusieurs pièces manufacturées, mesurées avec la méthode de contrôle selon l'invention. La figure 10 représente des courbes d'impédances normalisées, reconstruites après le contrôle de onze pièces manufacturées. Chaque pièce manufacturée a été exposée à un même champ magnétique variable au cours du temps dont la fréquence a varié entre 10Hz et $10^5$ Hz, avec un dispositif de contrôle comprenant une seule bobine émettrice-réceptrice, dont l'impédance a été mesurée simultanément à l'exposition au champ magnétique variable de la pièce manufacturée.

Les pièces manufacturées testées étaient toutes du même modèle, mais dix pièces manufacturées d'une famille A comprenaient un marqueur, et une onzième pièce manufacturée d'une famille B était une pièce manufacturée dépourvue de marqueur, malgré un aspect visuel extérieur tout à fait similaire aux pièces manufacturées équipées de marqueur. Dans le détail, la matière d'une partie des dix pièces manufacturées de la famille A était en une première nuance d'acier inoxydable (le marqueur), et la matière du boitier de la onzième pièce manufacturée de la famille B était en une deuxième nuance d'acier inoxydable.

On peut noter que la figure 10 montre toutes les courbes des pièces manufacturées de la famille A dans un même groupe très resserré, alors que la courbe de la onzième pièce manufacturée de la famille B est très différente. Il ressort que la méthode de contrôle, consistant à exposer une pièce manufacturée à un champ magnétique variable pour mesurer une réponse magnétique, peut servir à contrôler / mesurer / authentifier avec fiabilité la pièce manufacturée comprenant un marqueur.

Suivant la mise en oeuvre du marqueur et sa localisation, il pourra être nécessaire ou pratique de démonter une partie de la pièce manufacturée, par exemple, retirer un couvercle, ou un boitier.

Application industrielle

Une méthode de contrôle selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

**Revendications**

1. Pièce manufacturée (100), comprenant au moins un composant conducteur de l'électricité procurant à la pièce manufacturée (100) une réponse magnétique donnée à une exposition à un champ magnétique prédéterminé et variable dans le temps, **caractérisée en ce que** la pièce manufacturée (100) comprend au moins un marqueur (110) agencé pour modifier la réponse magnétique donnée de la pièce manufacturée (100), afin de procurer à la pièce manufacturée (100) marquée une réponse magnétique spécifique et prédéterminée.

2. Pièce manufacturée (100) selon la revendication 1, dans laquelle le marqueur (110) est inclus dans un composant fonctionnel de la pièce manufacturée (100).

3. Pièce manufacturée (100) selon la revendication 2, dans laquelle le marqueur (110) est un évidement ménagé dans le composant fonctionnel.

4. Pièce manufacturée (100) selon la revendication 2, dans laquelle le marqueur (110) est un insert ménagé dans le composant fonctionnel.

5. Pièce manufacturée (100) selon la revendication 1, dans laquelle le marqueur (110) forme un composant spécifique et/ou non-fonctionnel de la pièce manufacturée (100).

6. Pièce manufacturée (100) selon la revendication 5, dans laquelle le marqueur (110) est un composant spécifique et/ou non-fonctionnel attaché à un composant fonctionnel de la pièce manufacturée (100).

7. Pièce manufacturée (100) selon l'une des revendications 1 à 6, dans laquelle le marqueur (110) est formé par une modification, par exemple locale, de la matière d'un composant de la pièce manufacturée (100), la modification, par exemple locale, étant formée par exemple par un traitement laser par exemple localisé, et/ou une implantation ionique par exemple localisée et/ou un dépôt par exemple localisé d'une couche suivi d'un traitement thermique de diffusion et/ou un traitement par exemple local de carburation / nitruration / oxydation et/ou leur combinaisons.

8. Pièce manufacturée (100) selon l'une des revendications 2 à 4 ou selon la revendication 6 ou 7, dans laquelle :

   - le composant fonctionnel est formé avec une première matière présentant au moins une première caractéristique magnétique prédéterminée ou une première caractéristique électrique prédéterminée,
   - le marqueur (110) est formé avec une deuxième matière présentant au moins une deuxième caractéristique magnétique prédéterminée ou une deuxième caractéristique électrique prédéterminée, différente respectivement de la première caractéristique magnétique prédéterminée ou de la première caractéristique électrique prédéterminée.

9. Pièce manufacturée (100) selon l'une des revendications 2 à 4 ou selon la revendication 6 à 8, dans laquelle :

   - le composant fonctionnel est formé avec une première matière présentant au moins une première perméabilité magnétique prédéterminée ou une première conductivité électrique prédéterminée,
   - le marqueur (110) est formé avec une deuxième matière présentant au moins une deuxième perméabilité magnétique prédéterminée ou une deuxième conductivité électrique prédéterminée, différente d'au moins 50% respectivement de la première perméabilité magnétique prédéterminée ou de la première conductivité électrique prédéterminée.

10. Pièce manufacturée (100) selon l'une des revendications 1 à 9, dans laquelle le marqueur (110) :

    - est métallique, et/ou
    - est une portion métallique d'un composant de la pièce manufacturée (100) ayant subi un traitement de surface ou un traitement thermique prédéterminé, ou une modification locale de la matière, et/ou
    - comprend une bobine électrique, et/ou
    - présente une température de Curie comprise entre 250 K et 400 K.

11. Pièce manufacturée (100) selon l'une des revendications 1 à 9, comprenant une pluralité de marqueurs (110) chacun agencé pour modifier la réponse magnétique donnée de la pièce manufacturée (100), afin de procurer à la pièce manufacturée (100) marquée une réponse magnétique spécifique et prédéterminée.

12. Pièce manufacturée (100) selon la revendication 10, dans laquelle au moins deux marqueurs (110) sont formés dans des matières différentes, de sorte à chacun modifier de manière spécifique la réponse magnétique donnée de la pièce manufacturée (100), afin de procurer à la pièce manufacturée (100) marquée une réponse magnétique spécifique et prédéterminée.

13. Pièce manufacturée (100) selon la revendication 10 ou 11, dans laquelle au moins deux marqueurs (110) sont agencés à des positions spécifiques et différentes de la pièce manufacturée (100), de sorte à chacun modifier de manière spécifique et locale la réponse magnétique donnée de la pièce manufacturée (100), afin de procurer à la pièce manufacturée (100) marquée au moins deux réponses magnétiques spécifiques, prédéterminées et locales.

14. Pièce manufacturée (100) selon l'une des revendications 10 à 12, dans laquelle la pluralité de marqueurs (110) est agencée dans la pièce manufacturée (100) de sorte à procurer un codage d'authentification avec la réponse magnétique spécifique et prédéterminée.

15. Méthode de contrôle d'une pièce manufacturée, susceptible de comprendre au moins un marqueur agencé pour modifier la réponse magnétique donnée de la pièce manufacturée, la méthode de contrôle comprenant les étapes consistant à :

    - placer la pièce manufacturée, ou au moins une partie de la pièce manufacturée, à une position relative prédéterminée par rapport à au moins une source de champ magnétique et/ou par rapport à au moins un dispositif de mesure de champ magnétique,
    - exposer la pièce manufacturée, ou au moins une partie de la pièce manufacturée, à au moins un champ magnétique prédéterminé et variable au cours du temps généré par la source de champ magnétique,
    - mesurer, au moyen d'au moins un dispositif de mesure de champ magnétique, au moins une caractéristique du champ magnétique au voisinage de la pièce manufacturée exposée au champ magnétique prédéterminé et variable au cours du temps,
    - déduire une réponse magnétique de la pièce manufacturée à partir de la caractéristique mesurée du champ magnétique au voisinage de la pièce manufacturée,
    - comparer la réponse magnétique de la pièce manufacturée à une réponse magnétique de référence pour vérifier/contrôler si la pièce manufacturée comprend le marqueur.

[Fig. 1]

[Fig. 2]

[Fig. 3]

100

P2

10

[Fig. 4]

100

110

[Fig. 5]

[Fig. 6]

[Fig. 7]

[Fig. 8]

[Fig. 9]

29
21A

29
21A
21B
21C

[Fig. 10]

[Fig. 11]

**Europäisches Patentamt**
**European Patent Office**
**Office européen des brevets**

## RAPPORT DE RECHERCHE EUROPEENNE

Numéro de la demande

EP 24 21 8880

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 03/017192 A1 (BTG INT LTD [GB]; ENGLANG JAMES MARK CARSON [GB] ET AL.) 27 février 2003 (2003-02-27) | 1-6,8,9, 11-15 | INV. B42D25/369 G08B13/24 |
| Y | * page 7, ligne 11 * * page 8, alinéa 2 * * page 3, alinéa 1 - page 16, alinéa 2 * * figures 1, 2 * * figures 5-8 * ----- | 2-7 | ADD. G01N27/72 |
| Y | WO 2007/148182 A2 (COROZITE S P A [IT]; PORCELLI MAURIZIO [IT]) 27 décembre 2007 (2007-12-27) * page 2, ligne 28 - page 8, ligne 31 * ----- | 2-7 | |
| X | CA 2 258 436 A1 (ROSEMAN MORTON F [CA]) 15 juillet 1999 (1999-07-15) * page 2, alinéa 3 - page 10, alinéa 2 * * page 11, alinéa 5 - page 12, alinéa 4 * ----- | 1,7,15 | |

| DOMAINES TECHNIQUES RECHERCHES (IPC) |
|---|
| B42D G08B B42F G01N |

Le présent rapport a été établi pour toutes les revendications

| Lieu de la recherche | Date d'achèvement de la recherche | Examinateur |
|---|---|---|
| Munich | 23 mai 2025 | Knoll, Stephan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 8880

La présente annexe indique les membres de la famille de brevets relatifs aux documents  brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2025

| Document brevet cité<br>au rapport de recherche | Date de<br>publication | Membre(s) de la<br>famille de brevet(s) | Date de<br>publication |
|---|---|---|---|
| WO  03017192      A1 | 27-02-2003 | AUCUN | |
| WO 2007148182     A2 | 27-12-2007 | WO     2007148182 A2<br>WO     2007148348 A1 | 27-12-2007<br>27-12-2007 |
| CA 2258436        A1 | 15-07-1999 | CA        2258436 A1<br>DE       19901379 A1<br>FR        2775374 A1<br>GB        2333666 A<br>US        6289141 B1 | 15-07-1999<br>26-08-1999<br>27-08-1999<br>28-07-1999<br>11-09-2001 |

EPO FORM P0460

Pour tout renseignement concernant cette annexe : voir Journal Officiel de l'Office européen des brevets, No.12/82